# EUROPEAN PATENT APPLICATION

(11) **EP 4 814 467 A1**
(43) Date of publication of application: **30.09.2026**
(21) Application number: 25167073.3
(22) Date of filing: 28.03.2025
(51) Int. Cl.: G01M 3/16, H01M 10/42

(54) **COOLANT LEAKAGE DETECTOR AND BATTERY SYSTEM INCLUDING THE SAME**

(71) Applicant: Samsung SDI Co., Ltd., Yongin-si, Gyeonggi-do 17084 (KR)
(72) Inventor: Gombats, Ilya, 8020 Graz (AT); Kurcik, Peter, 8505 St. Nikolai im Sausal (AT)
(74) Representative: Gulde & Partner

(57) **Abstract**

The present disclosure refers to a coolant leakage detector (10) for detecting coolant in a battery system and a battery system including the same. The coolant leakage detector (10) includes at least one sensor housing (20; 20A, 20B); a first electrically conductive pin (30A) protruding from the at least one sensor housing (20; 20A, 20B); a second electrically conductive pin (30B) protruding from the at least one sensor housing (20; 20A, 20B); wherein the first electrically conductive pin (30A) and the second electrically conductive pin (30B) includes a different electrode material so that a galvanic cell voltage (Vgal) is created between the first electrically conductive pin (30A) and the second electrically conductive pin (30B) when the different electrode materials are fluid-connected by leaked coolant liquid; and a leakage detection monitoring unit (40) electrically connected to the first electrically conductive pin (30A) and the second electrically conductive pin (30B) and configured to sense leaked coolant based on the galvanic cell voltage (Vgal) between the first electrically conductive pin (30A) and the second electrically conductive pin (30B).

## Description

### Field of the Disclosure

Embodiments of the present disclosure relate to a coolant leakage detector and a battery system including the same.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. Common battery cell formats, include, for example, cylindrical, prismatic, and pouch.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common cell management unit and arranged in a housing. In the modular design, pluralities of battery cells are connected together to form submodules and several submodules are connected together to form the battery module. In automotive applications, battery systems often include a plurality of battery modules connected together in series to provide a desired voltage.

A battery pack is a set of any number of (for example identical) battery modules and/or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

The interface to the cooling system is more complex, as the cooling apparatus is in direct contact with the electrical components of the battery. In the case of cells with a low height and sufficiently thick cell walls, it may be sufficient to simply make contact with the bottom of the battery cells via a cooling plate. Should this prove inadequate, supplementary heat conduction elements must be incorporated between the battery cells to facilitate the transfer of heat to the cooling plate. The use of fluid-conducting cooling plates between the cells has been demonstrated to be an effective method, as the heat conduction path from the interior of the cell to the cooling fluid is relatively short, resulting in a high degree of temperature homogeneity within the cell. An alternative approach to cooling is arrester cooling. In this method, the interior of the cell is cooled directly via the electrodes. Pouch cells are particularly well-suited for this type of cooling, as they have flat and therefore relatively easy-to-contact terminals. The waste heat from the cells is directed into a cooling plate. There, either cooling water or an evaporating refrigerant absorbs the heat and dissipates it to the environment via the vehicle's cooling or refrigeration system.

Supplying a battery pack or a battery system with cooling liquid, e.g. water, causes a risk that coolant liquid may leak from the cooling channels at interfaces in the battery system, e.g. in a battery pack or within the battery module. Therefore, it is of importance that such leakage events are rapidly but securely detected to prevent damaging of the battery system and the electronic operating units within the battery system. On the other hand, false detections should be prevented that unnecessarily interferes with operations of electronic device of the battery system.

According to previous leakage detectors, leaked coolant liquid is detected by electrical resistance measurement between two protruding pins of a coolant liquid detector. In a case where coolant leakage occurs, the resistance between the pins decreases (as air is replaced by liquid) and this resistance drop can be detected. The materials of the pins are the same electrical material and the voltage is applied between the pins where resistance is measured.

However, such detectors operate less accurate and are very sensitive to vibrations and temperature as the measured resistance are in high-ohmic range and as well dependent on a number of free ions in the liquid.

### Summary of Invention

The invention is defined by the appended claims. The description that follows is subjected to this limitation. Any disclosure lying outside the scope of the claims is only intended for illustrative as well as comparative purposes.

According to an embodiment, a coolant leakage detector for detecting leaked coolant in a battery system is provided. The coolant leakage detector includes at least one sensor housing. Further, the coolant leakage detector includes a first electrically conductive pin protruding from the at least one sensor housing. The coolant leakage detector further includes a second electrically conductive pin protruding from the at least one sensor housing. The first electrically conductive pin and the second electrically conductive pin include a different electrode material so that a galvanic cell voltage is created between the first electrically conductive pin and the second electrically conductive pin when the different materials are fluid-connected by leaked coolant. A leakage detection monitoring unit is electrically connected to the first electrically conductive pin and the second electrically conductive pin and configured to sense leaked coolant based on the galvanic cell voltage detected between the first electrically conductive pin and the second electrically conductive pin.

According to another embodiment, a battery system is provided which includes a plurality of battery cells accommodated within a battery pack housing. A coolant leakage detector is provided within the battery pack housing to detect leaked coolant.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a perspective view a coolant leakage detector according to an embodiment.
FIG. 2 illustrates a cross section view of the coolant leakage detector according to A-A as indicated in FIG. 1 according to an embodiment.
FIG. 3 illustrates a cross section view of the coolant leakage detector according to A-A as indicated in FIG. 1 according to another embodiment.
FIG. 4 illustrates a cross section view of the coolant leakage detector according to A-A as indicated in FIG. 1 according to another embodiment.
FIG. 5 illustrates a cross section view of the coolant leakage detector according to A-A as indicated in FIG. 1 according to another embodiment.
FIG. 6 illustrates a top view of a coolant leakage detector according to an embodiment.
FIG. 7 illustrates a schematic view of a battery system according to an embodiment.
FIG. 8 illustrates a schematic view of a battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof. The term "consisting essentially of" means that specific further components can be present, namely those not materially affecting the essential characteristics of a composition.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an embodiment, a coolant leakage detector for detecting leaked coolant in a battery system is provided. The coolant leakage detector includes at least one sensor housing. Further, the coolant leakage detector includes a first electrically conductive pin protruding from the at least one sensor housing. The coolant leakage detector further includes a second electrically conductive pin protruding from the at least one sensor housing. The first electrically conductive pin and the second electrically conductive pin include a different electrode material so that a galvanic cell voltage is created between the first electrically conductive pin and the second electrically conductive pin when the different electrode materials are fluid-connected by leaked coolant. A leakage detection monitoring unit is electrically connected to the first electrically conductive pin and the second electrically conductive pin and configured to sense leaked coolant based on the galvanic cell voltage detected between the first electrically conductive pin and the second electrically conductive pin.

The electrode materials of the first electrically conductive pin and the second electrically conductive pin may have a different standard electrode potential or, in other words, a different nobility. Thus, a potential difference is formed between the pins having the different electrode material. The coolant may be water or any other coolant carrying ions. The electrically conductive pins include different electrode materials for forming a battery so that pins are providing the voltage, i.e. the galvanic cell voltage, which indicates when coolant liquid fluid-connects the different electrode materials. An event of coolant leakage event, for example, may result in a jump from 0V to the galvanic cell voltage depending of the electrode material. The leakage detection monitoring unit may be referred to as leakage detection monitoring circuit. The leakage detection monitoring unit may include a processing unit and/or a voltage senor unit to measure the galvanic cell voltage. The cell voltage may be referred to as a battery voltage. The electrode materials may be corrosion free material.

The coolant leakage detector has an advantage that a stable and distance-independent detectable voltage is provided over the pins in a coolant leakage event compared to resistance determination. This is an event where coolant has leaked and which may cause harm to the electronic operating units. Therefore, an event of leakage can be securely detected based on the generated galvanic cell voltage. This is the case even if the electronic pins are far away from each other. The galvanic cell voltage depends on the selected electrode materials and is therefore constant voltage signal that does not depend on the relative positioning of the pins. The material selection can be optimized according to the desired galvanic cell voltage and/or material costs. Based on detecting the leaked coolant, a safety operation can be initiated by the leakage detection monitoring unit, e.g., outputting a control signal to shut down an operation of the battery system or a component thereof or to output an alarm signal. The galvanic cell voltage may be amplified by an amplifier of the leakage detection monitoring unit.

According to another embodiment, the first electrically conductive pin and/or the second electrically conductive pin include an electrically conductive carrier material and a coating material covering the conductive carrier material, wherein a first coating material of the first electrically conductive pin and a second coating material of the second electrically conductive pin include (e.g. consist of or are made of) a different electrode material so that the galvanic cell voltage is created, e.g. generated, between the first electrically conductive pin and the second electrically conductive pin when the different electrode materials of the coating materials are fluid-connected by leaked coolant. Since the electrode material may be costly, this embodiment may save electrode material since for detecting a coolant leakage event only a (thin) coating layer is needed that is capable of generating the galvanic cell voltage for a limited time to allow the detection. For example, a time window of only 100 ms may be sufficient to detect the coolant leakage event. Thus, the embodiment safes costly material while the carrier material of the opinion can be cheaper like, e.g., copper.

According to another embodiment, the conductive carrier material includes a portion which is not covered by coating material, wherein at least the portion of the conductive carrier material is encapsulated by an encapsulation material. Thus, while electrode material is further saved in this embodiment, the conductive carrier material, e.g. copper, is prevented from contacting the coolant (e.g. water), which could result in a shortening of the generated battery due to conductive path to the conductive carrier material of the other electrically conductive path.

According to another embodiment, the coating material covers a second portion of the conductive carrier material while not covering a first portion, the second portion being farther away from the sensor housing than the first portion, wherein the encapsulation material encapsulates at least the first portion of the conductive carrier material. In this embodiment, a tip portion, e.g. only the tip portion, may have the coating material with the electrode material that causes the galvanic cell voltage once fluid-connected with the other coating material. In this case, electrode material is saved while allowing safe operation conditions and preventing shortening of the formed battery in a leakage detection event while allowing the probing of the coolant with the tip portion to ensure contacting with coolant in a leakage case.

According to another embodiment, the encapsulation material includes an overlap portion overlapping with the coating material. This ensures that the transition portion, which is critical, between coating material having the electrode material and the conductive carrier material is safely encapsulated.

According to another embodiment, one among the first coating material and the second coating material is made of a gold and the other one among the first coating material and the second coating material is made of an electrode material other than gold. Gold is a good selection as it can provide a large galvanic cell voltage. The other material may be nickel but the disclosure is not restricted thereto. The combination of nickel and gold provide excellent results. Since only a thin coating may be required, gold (and nickel) can be used to optimize the galvanic cell voltage created in the leakage case to stably detect an event of leaked coolant.

According to another embodiment, the first electrically conductive pin and/or the second electrically conductive pin are made of a different electrode material. Therefore, in this embodiment, the electrically conductive pins are directly used for causing the galvanic cell voltage, i.e., the battery. This may result in the requirement of less parts and eases the manufacturing. For example, pins may be formed as (thin) plates to save material costs.

According to another embodiment, one among the first electrically conductive pin the second electrically conductive pin is made of gold and the other one among the first electrically conductive pin the second electrically conductive pin is made of an electrode material other than gold. Gold may help to provide a large galvanic cell voltage which eases detection. The other material may be nickel. Nickel and gold provide an excellent combination providing excellent results in terms of environmental robustness and vibration resistance.

According to another embodiment, a water-soluble coating covers the first electrically conductive pin and/or the second electrically conductive pin. A water-soluble coating is a layer using a material that can be dissolved by water or water-based liquid when such liquid or water-containing liquid contacts the water-soluble coating. Thus, due to the water-soluble coating, normal humidity may not be able to dissolve the water-soluble coating, i.e., may not be sufficient to dissolve the water-soluble coating, while a (e.g. sufficient) amount leaked coolant liquid may dissolve the water-soluble coating to allow the exposed portions to be electrically connected through the leaked liquid. Therefore, false leakage detection may be avoided by use of the water-soluble coating in cases where, for example, only small amounts of liquids are present due to, e.g., liquid condensation or humidity. In other words, a detection threshold is established avoiding false detection caused by normal humidity and normal condensed water or for very minor leakage cases. The coolant liquid may refer to water or water-based liquid.

According to another embodiment, the water-soluble coating includes a polyvinyl alcohol, PVA, tape. The PVA tape is a water-soluble thermoplastic that can be attached with ease on the conductors as a film or as a coating. That is, the PVA tape can be easily applied to the openings, i.e. the exposed portions. The PVA tape is very robust against humidity and thus safely prevents false detection of normal humidity conditions or small amounts of liquid leakage.

According to another embodiment, the first electrically conductive pin and the second electrically conductive pin have a distance from each other of above a predetermined threshold distance, wherein the predetermined threshold distance is set to prevent false detection. Since the created voltage depends only on the selection in the electrode material, a larger distance between the pins may still provide the same galvanic cell voltage. However, as the distance is increased above a predetermined threshold distance is set to prevent false detection, the likelihood for a false detection due to humidity or condensed water may be decreased compared to a case in resistive measuring where the pins need to be very close to be able to detect the high ohmic resistance. Thus, false detection due to normal humidity can be prevented while providing sufficient output voltage to detect the coolant leakage event. The threshold distance may be value found in experimental studies.

According to another embodiment, the predetermined threshold distance may be 4 cm or more, 10 cm or more, or 1 m or more. Thus, an important advantage is that the pins are distributed longer distances from each other without significant loss/drop in the galvanic cell voltage. Despite of that the pins are spaced as above, the voltage of the galvanic cell remains stable, i.e. constant, to remain strong enough for detection when compared to resistive detection.

According to another embodiment, the first electrically conductive pin and the second electrically conductive pin are spaced from a bottom of the at least one housing by a same height. Thus, the horizontally spaced electrodes may be arranged some mm above the bottom of the pack, e.g., 10 mm. The height further reduces the risk of false detections. For example, a filling height of e.g. 10 mm with liquid before being detected may be accepted since only a contacting of the upper terminals may be problematic.

According to another embodiment, the at least one sensor housing includes a first sensor housing and a second sensor housing spaced from each other, wherein the first electrically conductive pin is protruding from the first sensor housing and the second electrically conductive pin is protruding from the second sensor housing. This modular separation into two separate sensor housings allows for flexible arrangement of the two sensing pins so that more suitable and optimal locations can be monitored.

According to another embodiment, the leakage detection monitoring unit is configured to: in a first mode, determine the galvanic cell voltage between the first electrically conductive pin and the second electrically conductive pin; and in a second mode, determine an electrical resistance between the first electrically conductive pin and the second electrically conductive pin. Further, the leakage detection monitoring unit is configured to sense leaked coolant based on the galvanic cell voltage and the electrical resistance. For example, (only) when both electrical resistance (e.g. below threshold value) and the galvanic cell voltage indicate a leakage event, the leakage detection monitoring unit may determine/sense a coolant leakage event. Else, the leakage detection monitoring unit may not detect the event. Therefore, in this case, a detection redundancy is implemented making use of that the liquid detector operated by resistance measurement, i.e., it allows for two independent detection methods due to the pins having different electrode material. Therefore, false detections can be reduced by using two different detection methods with the same detector device.

According to an embodiment, a battery system includes a plurality of battery cells accommodated within a battery pack housing. The battery system includes a coolant leakage detector according to any of the above described embodiments within the battery pack housing. The same technical effects as described above may be achieved.

According to another embodiment, the first electrically conductive pin and the second electrically conductive pin are located at opposite ends of the battery pack housing or at opposite ends of a battery cell stack including a plurality of battery cells. Since the pins can be placed with larger distance between each other, the above locations can be used for monitoring for leakage events providing detectable voltages.

### Specific Embodiments

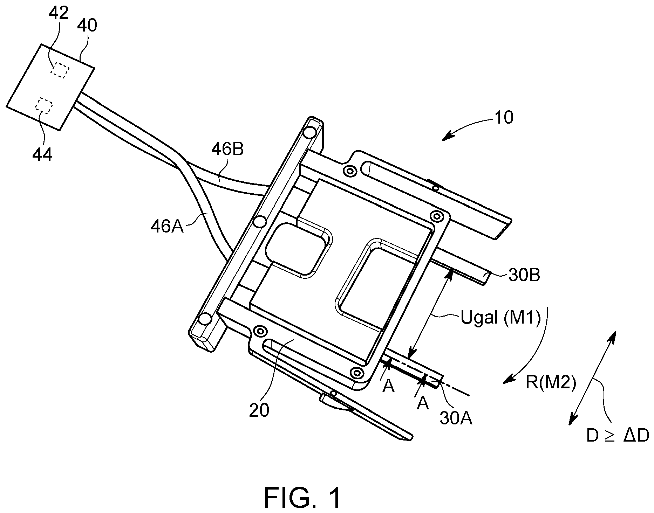

FIG. 1 illustrates a perspective view of a coolant leakage detector 10 according to an embodiment of the disclosure.

The coolant leakage detector 10 is capable of stably detecting a coolant leakage event that may occur in a battery system 100. For example, the battery system 100 may include a cooling circuit, e.g. cooling plate, cooling channel and/or cooling interfaces that may guide coolant through a battery pack or a battery module of the battery pack, to carry away excessive heat from battery cells 110. In a coolant leakage event, coolant may leak from the cooling circuit and may cause damage to electronic devices of the battery system 100. For safety purposes, a leakage event should be detected as early and as reliable as possible.

FIG. 1 therefore describes a coolant leakage detector 10 for detecting leaked coolant in the battery system 100. The coolant may be a liquid which can carry ions. For example, the coolant may be water but the disclosure is not restricted thereto. A different coolant liquid may be provided as longs as it carries ions.

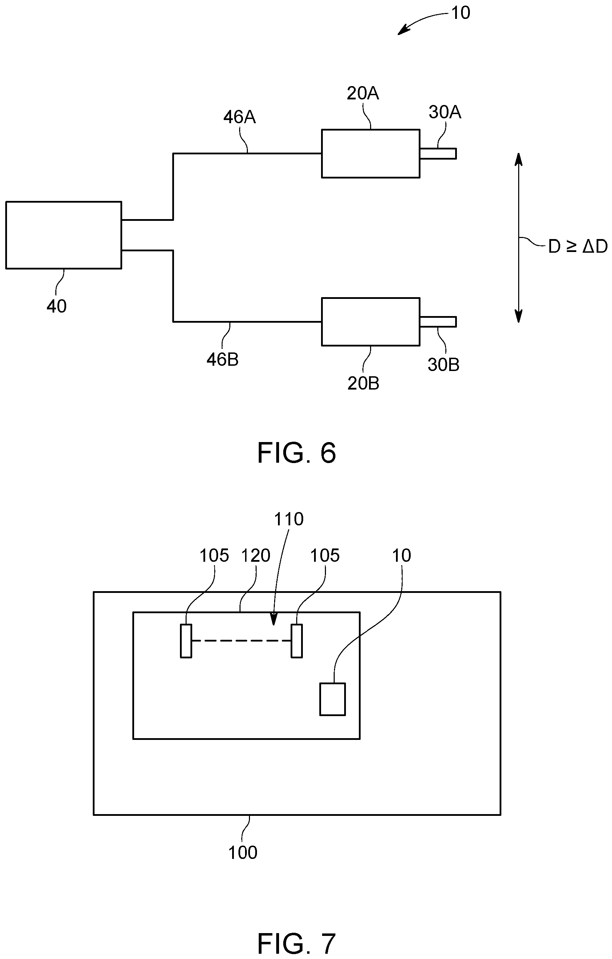

The coolant leakage detector 10 further includes at least one sensor housing 20; 20A, 20B. For example, the at least one sensor housing 20; 20A, 20B may be made of a plastic material. According to FIG. 1, a single sensor housing 20 may be provided. However, in another embodiment, for example, according to FIG. 6, two separate sensor housings 20A, 20B may be provided as will be explained further below.

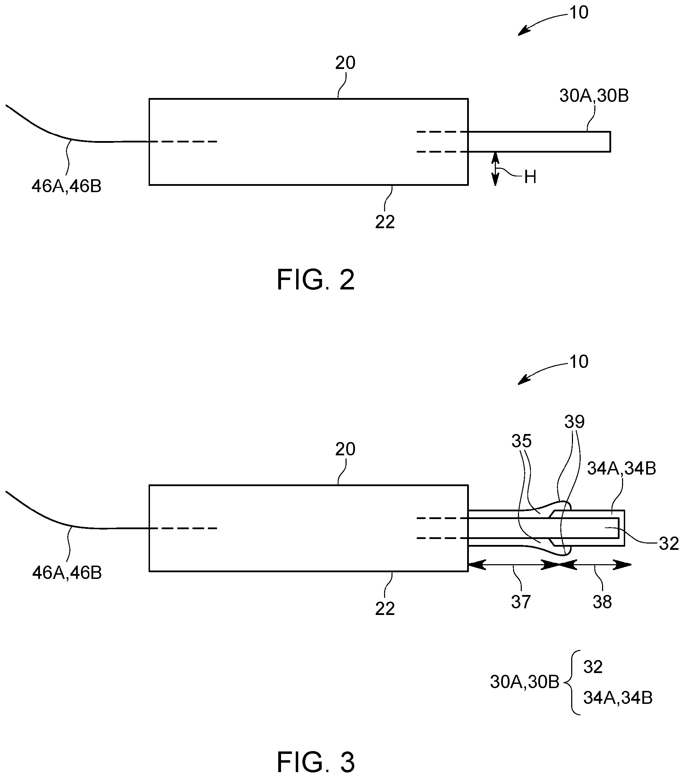

Referring to FIG. 1 and as well the other FIGS. 2 to 6, a first electrically conductive pin 30A protrudes from the sensor housing 20. Furthermore, a second electrically conductive pin 30B protrudes from the sensor housing 20. The electrically conductive pins 30A, 30B may protrude while being spaced from each other.

The first electrically conductive pin 30A and the second electrically conductive pin 30B include a different electrode material. Thus, the electrically conductive pins 30 A, B may act as a electrodes for detecting leaked coolant.

I.e., the first electrically conductive pin 30A may include a first electrode material and the second electrically conductive pin 30B may include a second electrode material which differs from the first electrode material. Due to the difference in the electrode material, a galvanic cell voltage Vgal (difference in electrical potential) is generated between the first electrically conductive pin 30A and the second electrically conductive pin 30B in case that the different electrode materials are fluid-connected by leaked coolant liquid, i.e., in a coolant leakage event. Thus, in other words, the different electrode materials when in contact with each other through the coolant acting as an electrolyte, form a battery (or galvanic cell) resulting in a potential difference, i.e. galvanic cell voltage Vgal, between the first electrically conductive pin 30A and the second electrically conductive pin 30B. Therefore, the occurrence of the galvanic cell voltage Vgal indicates an event of leaked coolant.

The coolant leakage detector 10 further includes a leakage detection monitoring unit 40. The leakage detection monitoring unit 40 is electrically connected to the first electrically conductive pin 30A and the second electrically conductive pin 30B. Since the leakage detection monitoring unit 40 is electrically connected to the first electrically conductive pin 30A and the second electrically conductive pin 30B, the galvanic cell voltage Vgal can be sensed by the leakage detection monitoring unit 40. For example, a corresponding voltage sensor may be included that is connected to the conductive pins 30A, 30B.

Thus, the leakage detection monitoring unit 40 detects the leaked coolant based on the galvanic cell voltage Vgal. Therefore, upon occurring of the galvanic cell voltage Vgal and detecting the same, a coolant leakage event can be robustly detected by the leakage detection monitoring unit 40.

In an example, the electrically conductive pins 30A, 30B may be connected to the leakage detection monitoring unit 40 via electric cables 46A, 46B that are electrically connected to the electrically conductive pins 30A, 30B. This is shown in FIG. 1.

Since the galvanic cell voltage Vgal depends on the electrode materials selected, an event of leakage can be securely and stably detected when compared to resistive determination. This is since even if the electrically conductive pins 30A, 30B are relatively spaced from each other, the galvanic cell voltage Vgal does not change with the distance of the electrically conductive pins 30A, 30B and the galvanic cell voltage Vgal is stable during vibration. Further, the galvanic cell voltage Vgal is only slowly decreasing with time. This provides sufficient time so that the coolant leakage event can be detected.

The leakage detection monitoring unit 40 may further include an amplifier 44 to amplify the detected voltages. In response to the coolant leakage detection, a safety operation for the battery system 100 may be executed by the leakage detection monitoring unit 40. For example, a control signal can be outputted to stop or interrupt an operation of the battery system 100 or an alarm signal can be outputted by the leakage detection monitoring unit 40.

As indicated in FIG. 1, the first electrically conductive pin 30A and the second electrically conductive pin 30B may be spaced from each other by a distance D. This distance D may be equal or larger than a predetermined threshold distance ΔD. The predetermined threshold distance ΔD is set, i.e. determined, to prevent false detection. For example, the predetermined threshold distance ΔD may be derived from experimental results. For example, the predetermined threshold ΔD may be 4 cm or more, 10 cm or more or 1 m or more. Thus, since the galvanic cell voltage Vgal depends only on the electrode materials, a larger distance D may be possible while still providing the same galvanic cell voltage Vgal (i.e., the same voltage value). Therefore, compared to resistive determination of leakage using pins that are close to each other (e.g. 2 cm) for having sufficient signal strength, i.e. resistance drop, which may have a relatively high risk for false detection due to humidity or condensed water, the present disclosure allows for reduced risk for false detection by increasing the relative distance D while still providing said galvanic cell voltage Vgal that is invariant of distance.

The sensing of the galvanic cell voltage Vgal can be made even more secure when operating the coolant leakage detector 10 in two different detection modes after each other and by introducing a redundancy to secure a detection result.

For example in a first mode M1, the leakage detection monitoring unit 40 may determine the galvanic cell voltage Vgal between the first electrically conductive pin 30A and the second electrically conductive pin 30B. This may be performed as described above.

In a second mode M2, the leakage detection monitoring unit 40 may determine an electrical resistance R between the first electrically conductive pin 30A and the second electrically conductive pin 30B. When no leaked coolant connects the first electrically conductive pin 30A and the second electrically conductive pin 30B, the resistance across electrically conductive pin 30A, 30B is very high (nonconductive) as the medium in between is air. When the leaked coolant connects the first electrically conductive pin 30A and the second electrically conductive pin 30B, an electrical connection due to the coolant liquid is provided so that resistance R drops to a finite resistance (below a threshold) that can indicate a leakage event. The order of the first mode M1 and the second mode M2 can be interchanged, i.e., the first mode M1 may be before the second mode M2 or the second mode M2 may be before the first mode M1.

Then, to establish redundancy security, from both operation modes M1, M2 the detection results may be used. For example, the leakage detection monitoring unit 40 may detect a coolant leakage event based on the galvanic cell voltage Vgal and the electrical resistance R, e.g. when dropped below a threshold. For example, when both detection methods have revealed a coolant leakage event, then it is very likely that the result is correct and that indeed a coolant leakage event has indeed occurred. As such, a number of false positive detections can be reduced so that operation of the battery system 100 is improved.

FIG. 2 illustrates a cross section view of the coolant leakage detector 10 according to section A-A as indicated in FIG. 1 according to an embodiment.

In the embodiment, the first electrically conductive pin 30A and/or the second electrically conductive pin 30B are made of (i.e. consist of) a different electrode material, for example, having different electrochemical nobility or electrode potential. For example, the first electrically conductive pin 30A may be made of, i.e. consist of, the first electrode material and the second electrically conductive pin 30A may be made of, i.e. consist of, the second electrode material.

Therefore, in this embodiment, the electrically conductive pins 30A, 30B are uniform in the electrode material. For reducing an amount of material, the electrically conductive pins 30A, 30B may be formed as plates, e.g., thin plates.

In an example, one among the first electrode material and the second electrode material is gold Au while the other one is an electrode material other than gold. For example, the other one among the first electrode material and the second electrode material may be nickel Ni.

For the combination of the electrode materials of nickel Ni and gold Au, excellent detection properties are provided since the galvanic cell voltage Vgal is very robust. For example, it was found that the galvanic cell voltage Vgal is robust with respect to environmental changes as like temperature changes. The results are listed below as pairs (T/ Vgal) of temperature T and galvanic cell voltage Vgal:
T/ Vgal:
$- 40 C ° / 0 , 45 V ,$
$25 C ° / 0 , 55 V ,$ and
$60 C ° / 0 , 61 V .$

Therefore, the experimental data show that the outputted voltage, i.e. the galvanic cell voltage Vgal, is relatively stable with respect to a temperature variance.

As can be seen in FIG. 2 (but this applies as well to FIG. 1 and the other embodiments), the first electrically conductive pin 30A and the second electrically conductive pin 30B are spaced from a bottom portion 22 of the at least one sensor housing 20A, 20B by a same height H. This height H as well provides a protection from false detections since an amount coolant requires to exceed the height H before being able to contact the electrically conductive pins 30A, 30B. This feature can be combined with all other embodiments.

FIG. 3 illustrates a cross section view of the coolant leakage detector according to A-A as indicated in FIG. 1 according to another embodiment.

The first electrically conductive pin 30A and the second electrically conductive pin 30B include an electrically conductive carrier material 32. The electrically conductive carrier material 32 may be made of, for example, a copper-based material. The electrically conductive carrier material 32 may form at least a core portion of the electrically conductive pins 30A, 30B.

A coating material 34A, 34B covers at least a portion of the conductive carrier material 32A, 32B. In an example, the coating material 34A, 34B covers an entirety of the corresponding coating material 34A, 34B.

In this embodiment, the first coating material 32A of the first electrically conductive pin 30A and the second coating material 32B of the second electrically conductive pin 30B are made (e.g. consists of) of different electrode material. For example, the first coating material 32A may be made of (e.g. consists of) the first electrode material and the second coating material 32B may be made of (e.g. consists of) the second electrode material.

Thus, a galvanic cell voltage Vgal is created between the first coating material 34A of the first electrically conductive pin 30A and the second coating material 34B of the second electrically conductive pin 30B when the coating materials 34A, 34B are fluid-connected by leaked coolant in an event of coolant leakage. Since only the coating causes the galvanic cell voltage Vgal, a cost saving electrically conductive carrier material 32 is provided. In addition, since the electrode material may be expansive, an amount of electrode material needed to cause the galvanic cell voltage Vgal in a case of a coolant leakage event may be reduced.

In an embodiment, the conductive carrier material 32 may be encapsulated by an encapsulation material 35. For example, the conductive carrier material 32 comprises a portion which is not covered by coating material 34A, 34B. At least the portion of the conductive carrier material 32 is encapsulated by an encapsulation material 35. Thus, the conductive carrier material 32 may not contact with the coolant liquid in a coolant leakage event. For example, the conductive carrier material 32 may be encapsulated in plastic. This can prevent a shortening of battery (galvanic cell) caused from the different electrode materials of the first and second electrically conductive pins 30A, 30B. As such, an amount of electrode material can be reduced while prevention of short circuiting.

In an embodiment as shown in FIG. 3, the electrically conductive carrier material 32 covers a second portion 38 of the conductive carrier material 32 while not covering a first portion 37 (i.e., exposed portion). Here, the first portion 37 is provided between the sensor housing 20 and the second portion 38. The second portion 38 may be referred to the tip portion. The encapsulation material 35 encapsulates at least the first portion 37 of the conductive carrier material 32. Therefore, the conductive carrier material 32 can be reduced while prevention short circuiting.

In an example, the encapsulation material 35 may include an overlap portion 39 overlapping with the coating material 34A, 34B. This may increase the encapsulation function at the transition between the conductive carrier material 32 and the coating material 34A, 34B.

The first coating material 34A and the second coating material 34B may be made of gold and the other one among the first coating material 34A and the second coating material 34B is made of an electrode material other than gold (e.g. nickel Ni). For example, the other one among the first electrode material and the second electrode material may be nickel Ni. In this embodiment, the use of gold can be effectively implemented since only a coating (even only local coating) of gold is required so that material costs are reduced.

For the combination of the electrode materials of nickel Ni and gold Au, it was found that the galvanic cell voltage Vgal is robust with respect to environmental changes as like temperature changes. The results are listed below as pairs (T/ Vgal) of temperature T and galvanic cell voltage Vgal:
T/ Vgal:
$- 40 C ° / 0 , 45 V ,$
$25 C ° / 0 , 55 V ,$ and
$60 C ° / 0 , 61 V .$

Therefore, the experimental data show that the outputted voltage, i.e., the galvanic cell voltage Vgal is relatively stable with respect to a temperature variance.

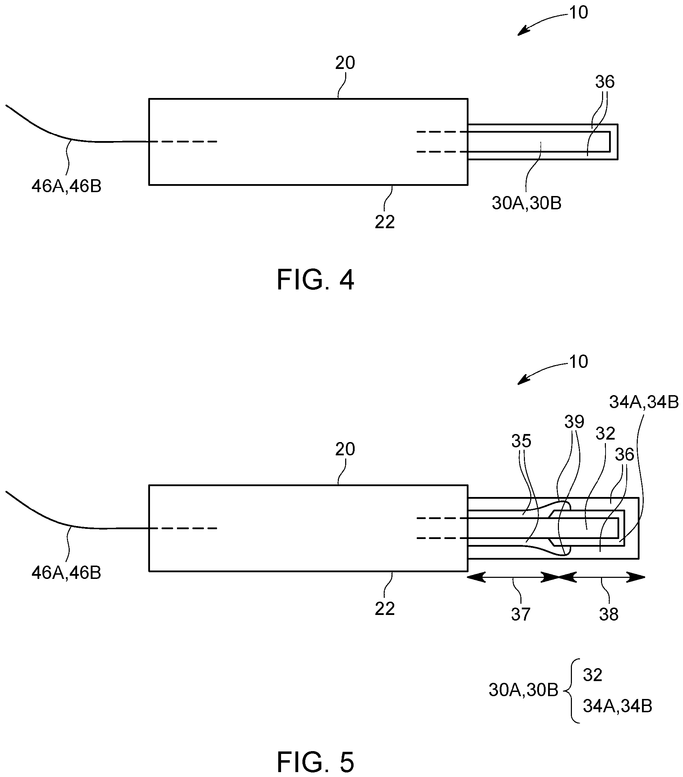

FIGS. 4 and 5 illustrate a cross section view of the coolant leakage detector 10 according to cross section A-A as indicated in FIG. 1 according to another embodiment. For the embodiments provided below, only differences with respect to FIGS. 2 and 3 are described.

In this embodiment, a water-soluble coating 36 covers the first electrically conductive pin 30A and/or the second electrically conductive pin 30B. Since leaked coolant requires a certain amount (threshold amount) of liquid (coolant like water or liquids that are hydrophilic and include water) to dissolve the water-soluble coating 36, small amounts of, for example, condensed water, may not dissolve the water-soluble coating 36 thereby not exposing first electrically conductive pin 30A and/or the second electrically conductive pin 30B. This makes the coolant leakage detector 10 more robust thereby avoiding false positive detections based on minor amounts of liquid due to, for example, humidity. The coolant leakage detector 10 may thus discriminate a positive liquid leakage event from a case of mere water condensation or minor leakage thereby increasing the detection robustness. The water-soluble coating 36 may be of electrically insulating material.

In an example, the water-soluble coating 36 is a polyvinyl alcohol, PVA, tape. This can be easily attached to the electrically conductive pins 30A,30B and provides a good moisture barrier. In an embodiment, the water-soluble coating 36, e.g. the PVA, may be coated on the electrically conductive pins 30A, 30B already in the manufacturing process, for example by attaching water-soluble coating 36, e.g. the PVA, as a tape, e.g., double-sided tape.

FIG. 6 illustrates a top view of a coolant leakage detector 10 according to another embodiment of the disclosure.

The at least one sensor housing 20 includes a first sensor housing 20A and a second sensor housing 20B which are spaced from each other. The first electrically conductive pin 30A protrudes from the first sensor housing 20A and the second electrically conductive pin 30B is protruding from the second sensor housing 20B. This may help local positioning of the leakage detector 10 due to the modular housing and specific locations suitable for detection of leaked coolant can be used.

The first sensor housing 20A and the second sensor housing 20B, and thereby the electrically conductive pins 30A, 30B, may be spaced from each other by the distance D. This distance D may be equal or larger than a predetermined threshold distance ΔD, wherein the predetermined threshold distance ΔD is set to prevent false detection. For example, the predetermined threshold ΔD may be 10 cm or more, or 1 m or more. Thus, since the galvanic cell voltage Vgal depends only on the electrode materials, a larger distance D may be possible while still providing the same galvanic cell voltage Vgal. Therefore, compared to resistive determination of leakage using pins that are close to each other (e.g. 2 cm) for having sufficient signal strength, i.e. resistance drop, which may have a relatively high risk for false detection due to humidity or condensed water, the present disclosure allows for reduced risk for false detection by increasing the relative distance D while still providing the fixed galvanic cell voltage Vgal that is invariant of distance.

FIG. 7 illustrates a schematic view of a battery system 100 according to an embodiment. The battery system 100 includes a plurality of battery cells 105 accommodated in a battery pack housing 120. The coolant leakage detector 10 is located within the battery pack housing 120 and refers to the embodiments according to any of the preceding embodiments.

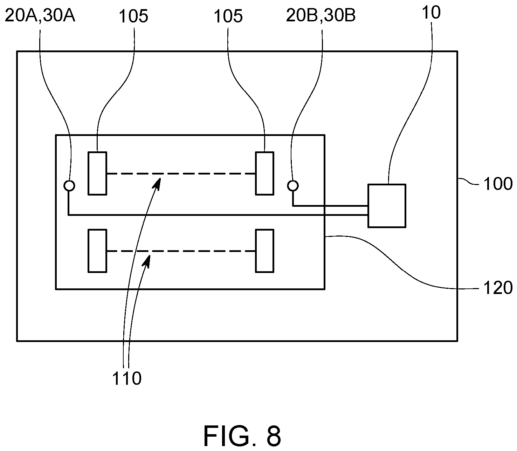

FIG. 8 illustrates a schematic view of a specific embodiment of a battery system 100 according to an embodiment.

In this embodiment, the first electrically conductive pin 30A, i.e. the first housing 20A, and the second electrically conductive pin 30B, i.e. the second housing 20B, are located at opposite ends in the battery pack housing 120 or at opposite ends of a battery cell stack 110 including plurality of battery cells 105. Thus, even such large distances can be monitored for cooling leakage detection.

In summary, the electrically conductive pins 30A, 30B include different electrode materials so that the pins provide a galvanic cell voltage when exposed to coolant fluid-connecting the different electrode materials. This provides a stable voltage over the pins which can be securely detected based on the galvanic cell voltage and irrespective of distance compared to resistive determination. That is, this is the case even if the pins are far away from each other since the galvanic cell voltage depends merely on the selected electrode materials. Thus, coolant leakage detection in a battery system 100 can be improved.

### Reference signs

- 10: coolant leakage detector

- 20, 20A, 20B: sensor housing
- 22: bottom portion

- 30A, 30B: pin (electrode)
- 32: carrier material
- 34A, 34B: coating material
- 35: encapsulating material
- 36: water-soluble coating
- 37: first portion
- 38: second portion
- 39: overlap portion

- Vgal: galvanic cell voltage
- R: electrical resistor

- 40: leakage detection monitoring unit
- 42: processing unit
- 44: amplifier
- 46A, 46B: electric wire (cable)

- D: distance
- ΔD: threshold distance
- H: height

- 100: battery system
- 105: battery cells
- 110: battery cell stack
- 120: battery pack housing

## Claims

1. A coolant leakage detector (10) for detecting leaked coolant in a battery system, comprising:
at least one sensor housing (20; 20A, 20B);
a first electrically conductive pin (30A) protruding from the at least one sensor housing (20; 20A, 20B);
a second electrically conductive pin (30B) protruding from the at least one sensor housing (20; 20A, 20B);
wherein the first electrically conductive pin (30A) and the second electrically conductive pin (30B) comprise a different electrode material so that a galvanic cell voltage (Vgal) is created between the first electrically conductive pin (30A) and the second electrically conductive pin (30B) when the different electrode materials are fluid-connected by leaked coolant; and
a leakage detection monitoring unit (40) electrically connected to the first electrically conductive pin (30A) and the second electrically conductive pin (30B) and configured to sense leaked coolant based on the galvanic cell voltage (Vgal) between the first electrically conductive pin (30A) and the second electrically conductive pin (30B).

2. The coolant leakage detector (10) as claimed in claim 1, wherein the first electrically conductive pin (30A) and/or the second electrically conductive pin (30B) comprise an electrically conductive carrier material (32) and a coating material (34A, 34B) covering at least a portion of the conductive carrier material (32), wherein a first coating material (34A) of the first electrically conductive pin (30A) and a second coating material (32B) of the second electrically conductive pin (30B) comprise a different electrode material so that a galvanic cell voltage (Vgal) is created between the first electrically conductive pin (30A) and the second electrically conductive pin (30B) when the coating materials (32A, 32B) are fluid-connected by leaked coolant.

3. The coolant leakage detector (10) as claimed in claim 2, wherein the conductive carrier material (32) comprises a portion which is not covered by coating material (34A, 34B), wherein at least the portion of the conductive carrier material (32) is encapsulated by an encapsulation material (35).

4. The coolant leakage detector (10) as claimed in claim 3, wherein the coating material (34A, 34B) covers a second portion (38) of the conductive carrier material (32) while not covering a first portion (37), the second portion (38) being farther away from the at least one housing (20) than the first portion (37), wherein the encapsulation material (35) encapsulates at least the first portion (37) of the conductive carrier material (32).

5. The coolant leakage detector (10) as claimed in claim 4, wherein the encapsulation material (35) may have an overlap portion (39) overlapping with the coating material (32A, 32B).

6. The coolant leakage detector (10) as claimed in one of the preceding claims 2 to 5, wherein one among the first coating material (32A) and the second coating material (32B) is made of gold and the other one among the first coating material (32A) and the second coating material (32B) is made of an electrode material other than gold.

7. The coolant leakage detector (10) as claimed in claim 1, wherein the first electrically conductive pin (30A) and/or the second electrically conductive pin (30B) are made of a different electrode material.

8. The coolant leakage detector (10) as claimed in one of the claims 1 to 7, wherein the first electrically conductive pin (30A) and the second electrically conductive pin (30B) have a distance (D) from each other that is above a predetermined threshold distance (ΔD), wherein the predetermined threshold distance (ΔD) is set to prevent false detection.

9. The coolant leakage detector (10) as claimed in claim 8, wherein the predetermined threshold (ΔD) is 4 cm or more, 10 cm or more, or 1 m or more.

10. The coolant leakage detector (10) as claimed in one of the claims 1 to 9,
wherein the at least one sensor housing (20; 20A, 20B) comprises a first sensor housing (20A) and a second sensor housing (20B), wherein the first electrically conductive pin (30A) is protruding from the first sensor housing (20A) and the second electrically conductive pin (30B) is protruding from the second sensor housing (20B).

11. The coolant leakage detector (10) as claimed in one of the claims 1 to 10, further comprising a water-soluble coating (36) covering the first electrically conductive pin (30A) and/or the second electrically conductive pin (30B).

12. The coolant leakage detector (10) as claimed in claim 11, wherein the water-soluble coating (36) comprises a polyvinyl alcohol, PVA, tape.

13. The coolant leakage detector (10) as claimed in one of the claims 1 to 12,
wherein the leakage detection monitoring unit (40) is configured to:
in a first mode, determine the galvanic cell voltage (Vgal) between the first electrically conductive pin (30A) and the second electrically conductive pin (30B); and
in a second mode, determine an electrical resistance (R) between the first electrically conductive pin (30A) and the second electrically conductive pin (30B); and
sense leaked coolant based on the galvanic cell voltage (Vgal) and the electrical resistance (R).

14. A battery system (100), comprising:
a plurality of battery cells (105) accommodated within a battery pack housing (120); and
a coolant leakage detector (10) according to any of the claims 1 to 13 within the battery pack housing (120).

15. The battery system (100) as claimed in claim 14,
wherein the first electrically conductive pin (30A) and the second electrically conductive pin (30B) are located at opposite ends of the battery pack housing (120) or at opposite ends of a battery cell stack (110) comprising the plurality of battery cells (105).

## Amended claims

### Amended claims in accordance with Rule 137(2) EPC.

1. A coolant leakage detector (10) for detecting leaked coolant in a battery system, comprising:
at least one sensor housing (20; 20A, 20B);
a first electrically conductive pin (30A) protruding from the at least one sensor housing (20; 20A, 20B);
a second electrically conductive pin (30B) protruding from the at least one sensor housing (20; 20A, 20B);
**characterized in that**,
the first electrically conductive pin (30A) and the second electrically conductive pin (30B) comprise an electrically conductive carrier material (32) and a coating material (34A, 34B) covering at least a portion of the conductive carrier material (32), wherein a first coating material (34A) of the first electrically conductive pin (30A) and a second coating material (32B) of the second electrically conductive pin (30B) comprise a different electrode material so that a galvanic cell voltage (Vgal) is created between the first electrically conductive pin (30A) and the second electrically conductive pin (30B) when the coating materials (32A, 32B) are fluid-connected by leaked coolant; and
a leakage detection monitoring unit (40) electrically connected to the first electrically conductive pin (30A) and the second electrically conductive pin (30B) and configured to sense leaked coolant based on the galvanic cell voltage (Vgal) between the first electrically conductive pin (30A) and the second electrically conductive pin (30B).

2. The coolant leakage detector (10) as claimed in claim 1, wherein the conductive carrier material (32) comprises a portion which is not covered by coating material (34A, 34B), wherein at least the portion of the conductive carrier material (32) is encapsulated by an encapsulation material (35).

3. The coolant leakage detector (10) as claimed in claim 2, wherein the coating material (34A, 34B) covers a second portion (38) of the conductive carrier material (32) while not covering a first portion (37), the second portion (38) being farther away from the at least one housing (20) than the first portion (37), wherein the encapsulation material (35) encapsulates at least the first portion (37) of the conductive carrier material (32).

4. The coolant leakage detector (10) as claimed in claim 3, wherein the encapsulation material (35) may have an overlap portion (39) overlapping with the coating material (34A, 34B).

5. The coolant leakage detector (10) as claimed in one of the preceding claims 1 to 4, wherein one among the first coating material (34A) and the second coating material (34B) is made of gold and the other one among the first coating material (34A) and the second coating material (34B) is made of an electrode material other than gold.

6. The coolant leakage detector (10) as claimed in one of the claims 1 to 5, wherein the first electrically conductive pin (30A) and the second electrically conductive pin (30B) have a distance (D) from each other that is above a predetermined threshold distance (ΔD), wherein the predetermined threshold distance (ΔD) is set to prevent false detection.

7. The coolant leakage detector (10) as claimed in claim 6, wherein the predetermined threshold (ΔD) is 4 cm or more, 10 cm or more, or 1 m or more.

8. The coolant leakage detector (10) as claimed in one of the claims 1 to 7,
wherein the at least one sensor housing (20; 20A, 20B) comprises a first sensor housing (20A) and a second sensor housing (20B), wherein the first electrically conductive pin (30A) is protruding from the first sensor housing (20A) and the second electrically conductive pin (30B) is protruding from the second sensor housing (20B).

9. The coolant leakage detector (10) as claimed in one of the claims 1 to 8, further comprising a water-soluble coating (36) covering the first electrically conductive pin (30A) and/or the second electrically conductive pin (30B).

10. The coolant leakage detector (10) as claimed in claim 9, wherein the water-soluble coating (36) comprises a polyvinyl alcohol, PVA, tape.

11. The coolant leakage detector (10) as claimed in one of the claims 1 to 10,
wherein the leakage detection monitoring unit (40) is configured to:
in a first mode, determine the galvanic cell voltage (Vgal) between the first electrically conductive pin (30A) and the second electrically conductive pin (30B); and
in a second mode, determine an electrical resistance (R) between the first electrically conductive pin (30A) and the second electrically conductive pin (30B); and
sense leaked coolant based on the galvanic cell voltage (Vgal) and the electrical resistance (R).

12. A battery system (100), comprising:
a plurality of battery cells (105) accommodated within a battery pack housing (120); and
a coolant leakage detector (10) according to any of the claims 1 to 11 within the battery pack housing (120).

13. The battery system (100) as claimed in claim 12,
wherein the first electrically conductive pin (30A) and the second electrically conductive pin (30B) are located at opposite ends of the battery pack housing (120) or at opposite ends of a battery cell stack (110) comprising the plurality of battery cells (105).
